Europäisches Patentamt

European Patent Office

Office européen des brevets

(11) Veröffentlichungsnummer: **0 550 862 A1**

# EUROPÄISCHE PATENTANMELDUNG

(21) Anmeldenummer: **92121548.9**

(22) Anmeldetag: **18.12.92**

(51) Int. Cl.5: **C08J 9/00**, C08J 9/18, C08J 9/22

(30) Priorität: **09.01.92 DE 4200559**

(43) Veröffentlichungstag der Anmeldung:
**14.07.93 Patentblatt 93/28**

(84) Benannte Vertragsstaaten:
**BE DE ES FR GB IT NL**

(71) Anmelder: **BASF Aktiengesellschaft
Carl-Bosch-Strasse 38
W-6700 Ludwigshafen(DE)**

(72) Erfinder: **De Grave, Isidoor, Dr.
Mandelring 3
W-6706 Wachenheim(DE)**
Erfinder: **Koegel, Wolfram
Eisenacher Weg 25
W-6800 Mannheim 31(DE)**
Erfinder: **Hahn, Klaus, Dr.
Im Buegen 9
W-6719 Kirchheim(DE)**

(54) **Polyolefin-Schaumstoffe mit homogener Zellstruktur.**

(57) Polyolefin-Schaumstoffe der Dichte 0,01 bis 0,1 g/cm$^3$ mit einer Zellzahl von 2 bis 1000 Zellen/mm$^2$ und Harzsäuren, niederen Alkylestern der Harzsäuren oder (Hydro)abietylphthalat als organische Schäumhilfe weisen eine homogene Zellstruktur auf.

EP 0 550 862 A1

Die Erfindung betrifft Polyolefin-Schaumstoffe mit homogener Zellstruktur, die eine spezielle organische Schäumhilfe enthalten, sowie ein Verfahren zu ihrer Herstellung.

Schaumstoffe auf Basis von Polyolefinen und Olefincopolymeren sind aufgrund ihrer Temperaturbeständigkeit und guten stoßdämpfenden Eigenschaften von großem technischen Interesse. Ihre Herstellung erfolgt in bekannter Weise durch Imprägnieren des Polymeren mit einem flüchtigen Treibmittel bei erhöhter Temperatur unter Druck und Entspannen des Gemisches. Man arbeitet entweder nach dem Extrusionsverfahren oder vorteilhaft nach dem Suspensions-Imprägnierverfahren. Bei letzterem geht man von Polymerpartikeln aus, die in wäßriger Suspension mit dem Treibmittel imprägniert und anschließend zu Schaumstoffpartikeln aufgeschäumt werden. Durch Verschweißen der Schaumstoffpartikel können Formkörper beliebiger Gestalt hergestellt werden.

Darüber hinaus können die Schaumstoffpartikel auch noch einer Druckbehandlung wie in DE-A 39 22 207 beschrieben unterworfen werden.

In der Praxis zeigt sich jedoch, daß die Zellstruktur der erhaltenen Schaumpartikel uneinheitlich ist. Das hat zur Folge, daß die Oberfläche der Formkörper eine ungleichmäßige, gefleckte Struktur aufweist, und daß beim Durchschneiden von Schaumstoff-Platten oder -Blöcken ungleichmäßige Schaumstrukturen erhalten werden.

Diese ungleichmäßigen Oberflächen oder Schnittflächen wirken insbesondere dann störend, wenn die Schaumstoffe aus optischen Gründen eingefärbt werden, insbesondere wenn sie dunkel eingefärbt sind, z.B. schwarz.

Aus der EP-A 168 954 ist ein Verfahren zur Herstellung von geschäumten Polypropylenharzpartikeln bekannt, bei dem eine anorganische oder organische Schäumhilfe eingesetzt wird. Die Schäumhilfe ist ein organischer oder anorganischer Feststoff mit einer Partikelgröße zwischen 0,1 und 150 $\mu$m und mit einem Schmelzpunkt, der höher liegt als die Temperatur, bei der die schäumbaren Partikel geschäumt werden. Es sind zahlreiche anorganische Schäumhilfen angegeben. Als Beispiele für geeignete organische Schäumhilfen sind ausschließlich Dibenzylidensorbitol und Aluminium-p-t-butylbenzoat genannt, wobei die Verwendung von Dibenzylidensorbitol besonders bevorzugt ist.

Aus der US-A 3,526,625 ist bekannt, bei der Herstellung von expandierbaren Styrolpolymerisaten 0,5 bis 2,5 Gew.% Harzsäuren, wie (Hydro)abietinsäure oder deren niedere Alkylester oder (Hydro)abietylphthalat mitzuverwenden. Die Produkte zeichnen sich durch eine außerordentlich niedrige Formtemperatur bei der Verarbeitung zu Schaumstoffen aus. Die Schaumstoffe haben dadurch bedingt den Nachteil einer zu niedrigen Wärmeformbeständigkeit. Auch ihre Schaumstruktur ist unbefriedigend.

Aus der US-A 4,769,394 sind Styrolpolymerisat-Schaumstoffe mit besonders gleichmäßiger und feinzelliger Schaumstruktur bekannt. Dies wurde durch den Zusatz einer geringen Menge eines Gemisches aus Harzsäuren oder deren niederen Alkylestern oder (Hydro)abietylphthalat und einem Polyoxyethylenmonoester oder -monoether erreicht. Aus der US-A 4,769,394 geht insbesondere auch hervor, daß die Nachteile, die bei der Mitverwendung von Harzsäuren oder deren niederen Alkylestern bzw. von Polyoxyethylenmonoestern oder -monoethern beobachtet werden, nicht auftreten, wenn man eine Kombination der beiden Zusatzstoffe verwendet.

Der Erfindung lag die Aufgabe zugrunde, Polyolefin-Schaumstoffe mit einer homogenen Zellstruktur (d.h. einer homogenen Schaumoberfläche und einer schmalen Zelldurchmesserverteilung) zu entwickeln.

Es wurde nun überraschenderweise gefunden, daß Polyolefin-Schaumstoffe, die als organische Schäumhilfe Harzsäuren, einen niederen Alkylester der Harzsäuren oder (Hydro)abietylphthalat enthalten, sämtliche gewünschten Eigenschaften aufweisen.

Gegenstand der Erfindung sind somit Polyolefin-Schaumstoffe der Dichte 0,01 bis 0,1 g/cm$^3$ mit einer Zellzahl von 2 bis 1000 Zellen/mm$^2$, die im allgemeinen 0,003 bis 0,3 Gew.%, bezogen auf das Olefinpolymerisat, Harzsäuren, einen niederen Alkylester der Harzsäuren oder (Hydro)abietylphthalat enthalten.

Gegenstand der Erfindung ist außerdem ein Verfahren zur Herstellung von Polyolefin-Schaumstoffen, wobei das Polyolefin in Form von Partikeln mit einem mittleren Durchmesser von 0,5 bis 5 mm zunächst in wäßriger Suspension mit der organischen Schäumhilfe beschichtet wird, dann mit 0,1 bis 0,4 kg, pro kg des Polyolefins, eines Treibmittels bei einer Temperatur im Bereich zwischen bis zu 20°C unterhalb des Kristallitschmelzpunktes und bis zu 20°C oberhalb des Kristallitschmelzpunktes des Polymeren unter Druck imprägniert und anschließend unter Aufschäumen entspannt wird.

Polyolefine im Sinne der Erfindung sind kristalline Olefinpolymerisate, deren Röntgenkristallinität bei 25°C über 25 % liegt. Für das Verfahren eignen sich Polyethylene niedriger, mittlerer und hoher Dichte, beispielsweise der Dichte 0,916 bis 0,965, vorzugsweise 0,920 bis 0,935 g/cm$^3$, wie sie nach Hoch-, Nieder- und Mitteldruckverfahren hergestellt werden, Polypropylen sowie Ethylen- und Propylencopolymere, die mindestens 50 Mol-% Ethylen-und/oder Propylen-Einheiten enthalten. Geeignete Comonomere sind beispielsweise $\alpha$-Alkene mit bis zu 12 Kohlenstoffatomen, wie Propylen, Buten, Penten, Hexen, Octen, ferner

EP 0 550 862 A1

Vinylester, wie Vinylacetat, Ester der Acrylsäure, Methacrylsäure, Maleinsäure oder Fumarsäure von Alkoholen, die 1 bis 8 C-Atome enthalten. Die Polyolefine besitzen im allgemeinen einen Schmelzindex MFI (230; 2,16) (nach DIN 53735) zwischen 0,5 und 15, vorzugsweise zwischen 1 und 12 und einen Schmelzbereich zwischen 100°C und 170°C, sowie eine Scherviskosität zwischen $1 \times 10^3$ und $1 \times 10^6$, gemessen in einem Rotationsviskosimeter bei 150°C und einem Kreisfrequenzbereich von $10^{-2}$ bis $10^2 s^{-1}$. Auch Mischungen verschiedener Polyolefine können verwendet werden.

Bevorzugt eingesetzt werden Ethylen-Propylen-Copolymere und Copolymere von Ethylen, Propylen und einem $C_4$- bis $C_8$-$\alpha$-Olefin.

Besonders bevorzugte Ethylen-Propylen-Copolymere sind Copolymere aus 0,5 bis 6 Gew.% Ethylen und 94 bis 99,5 Gew.% Propylen.

Besonders bevorzugte Copolymere von Ethylen, Propylen und einem $C_4$- bis $C_8$-$\alpha$-Olefin sind Copolymere aus 0,5 bis 6 Gew.%, vorzugsweise 1 bis 6 Gew.%, insbesondere 1,5 bis 6 Gew.% Ethylen, 88 bis 99 Gew.%, vorzugsweise 89 bis 98 Gew.%, insbesondere 90 bis 97 Gew.% Propylen und 0,5 bis 6 Gew.%, vorzugsweise 1 bis 6 Gew.%, insbesondere 1 bis 5 Gew.% eines $C_4$- bis $C_8$-$\alpha$-Olefins, wie Buten-1, Penten-1, Hexen-1, Hepten-1 oder Octen-1. Die Copolymeren sollen einen G-Modul von 100 bis 800, vorzugsweise 100 bis 700, insbesondere 150 bis 600 N/mm$^2$ aufweisen.

Die Herstellung der Copolymeren erfolgt in bekannter Weise durch Copolymerisation der Monomeren mittels Übergangsmetallkatalysatoren. Die Copolymeren zeigen einen überwiegend statistischen Aufbau, sie sind im allgemeinen linear aufgebaut und im allgemeinen unvernetzt. Der Kristallitschmelzpunkt, bestimmt nach der DSC-Methode, liegt im allgemeinen zwischen 110 und 155, insbesondere zwischen 115 und 150°C. Die Schmelzwärme, bestimmt nach der DSC-Methode, liegt im allgemeinen zwischen 30 und 110 J/g, vorzugsweise zwischen 35 und 100 J/g. Vorzugsweise werden Copolymere mit einem Schmelzindex MFI (230; 2,16) (nach DIN 53735) von 0,5 bis 15, insbesondere 1 bis 12 [g/10 min] verwendet.

Wesentliches Merkmal der Erfindung ist, daß die Polyolefin-Schaumstoffe als organische Schäumhilfe Harzsäuren, wie Abietinsäure, Hydroabietinsäure oder deren Isomeren, niedere Alkylester der Harzsäuren, beispielsweise den Methyl-, Ethyl-, Propyl-, Isopropyl, n-, i- oder tert.-Butylester, Abietylphthalat oder Hydroabietylphthalat enthalten. Auch Gemische dieser Stoffe sind verwendbar. Diese organische Schäumhilfe wird im allgemeinen in Mengen von 0,003 bis 0,3 Gew.%, vorzugsweise 0,01 bis 0,1 Gew.%, bezogen auf das Polyolefin, verwendet. Gut geeignet sind auch die technischen Harzsäuren, wie (Hydro)-abietinsäuregemische und Naturstoffe, wie Kolophonium, die im wesentlichen aus diesen Stoffen bestehen.

Der Schaumstoff kann daneben übliche Zusatzstoffe in wirksamen Mengen enthalten, wie Farbstoffe, Pigmente, Keimbildner, Stabilisatoren, Flammschutzmittel, Synergisten, Füllstoffe, Weichmacher, Gleitmittel und Antistatika.

Durch die Mitverwendung von Keimbildnern kann die Zellgröße reguliert werden. Geeignete Keimbildner sind aus dem Stand der Technik bekannt. Geeignet sind beispielsweise Talkum, Calciumcarbonat, Calciumsulfat, Diatomeenerde, Magnesiumcarbonat, Magnesiumhydroxid, Magnesiumsulfat, Tonerde und Bariumsulfat.

Man benutzt den Keimbildner im allgemeinen in Mengen von 0,05 bis 5, vorzugsweise 0,5 bis 2 Gew.%, bezogen auf das Polyolefin.

Die erfindungsgemäßen Schaumstoffe haben eine Dichte von 0,01 bis 0,1 g/cm$^3$, vorzugsweise 0,01 bis 0,08 g/cm$^3$, insbesondere 0,02 bis 0,08 g/cm$^3$. Sie sind überwiegend geschlossenzellig mit einer Zellzahl von 2 bis 1000, vorzugsweise 5 bis 800, insbesondere 10 bis 500 Zellen/mm$^2$.

Die Herstellung der erfindungsgemäßen Schaumstoffe erfolgt durch Vermischen des Polyolefins mit der organischen Schäumhilfe, mit einem flüchtigen Treibmittel und gegebenenfalls den Zusatzstoffen und anschließendes Verschäumen. Beispielsweise werden die Komponenten in einem Extruder vermischt und das Gemisch anschließend durch eine Düse extrudiert und zu Granulaten verarbeitet.

Geeignete Treibmittel sind niedrig siedende Halogenkohlenwasserstoffe und vorzugsweise aliphatische Kohlenwasserstoffe mit 3 bis 5 C-Atomen, wie Propan, n-Butan, Isobutan, n-Pentan, Isopentan und/oder Neopentan. Auch Gemische der genannten Treibmittel können verwendet werden.

Vorzugsweise erfolgt die Herstellung der erfindungsgemäßen Schaumstoffe in an sich bekannter Weise nach dem Suspensions-Imprägnier-Verfahren. Das Polyolefin wird dazu zweckmäßig in Form von Partikeln mit einem mittleren Durchmesser von 0,5 bis 5 mm, vorzugsweise 0,6 bis 4 mm, in wäßriger Suspension mit der Schäumhilfe beschichtet und mit 0,1 bis 0,4, vorzugsweise 0,15 bis 0,3 kg pro kg des Polyolefins, eines Treibmittels bei einer besonders bevorzugt etwa 5°C bis 20°C unter dem Kristallitschmelzpunkt (DSC-Maximum) des Polymeren liegenden Temperatur unter Druck imprägniert und anschließend unter Aufschäumen entspannt.

Erfindungsgemäß werden hierbei dem Suspensionsmedium als Schäumhilfe Harzsäuren, niedere Alkylester der Harzsauren oder (Hydro)abietylphthalat in einer Menge von 0,003 bis 0,3 Gew.%, bezogen auf das Polyolefin, zugegeben. Vorzugsweise werden 0,01 bis 0,25 und besonders bevorzugt 0,02 bis 0,2 Gew.% eingesetzt.

Erfindungsgemäß hat es sich bei beiden Verfahrensweisen als besonders vorteilhaft herausgestellt, die Abietinsäure vor dem Zudosieren in einem höhersiedenden Kohlenwasserstoff oder Alkohol im Gewichtsverhältnis von 1:4 bis 4:1, vorzugsweise 1:2 bis 2:1 und besonders bevorzugt zwischen 1,1:1 und 1:1,1 zu lösen. Ein hierfür geeigneter Alkohol ist beispielsweise Isopropanol.

Die erhaltenen Schaumstoffpartikel weisen im allgemeinen einen mittleren Durchmesser zwischen 1 und 20 mm und eine Schüttdichte von etwa 7 bis 55 g/l, vorzugsweise 10 bis 50 g/l auf.

Insbesondere bei niedrigen Schüttdichten diffundiert das Treibmittel häufig aus den Zellen schneller heraus als Umgebungsluft hineindiffundiert. Die Partikel können daher zum Teil auf bis zu 40 % ihres ursprünglichen Volumens schrumpfen. Sie nehmen ihre ursprüngliche Gestalt wieder an, wenn sie bei Raumtemperatur oder einer erhöhten Temperatur, maximal 20°C unterhalb des Kristallitschmelzpunktes des Copolymeren, mit Luft oder Stickstoff unter einem Überdruck von 0,5 bis 10 bar eine ausreichende Zeit, im allgemeinen 5 bis 500 Minuten, behandelt werden. Die Schaumstoffpartikel können nach bekannten Verfahren durch Erhitzen in porösen oder nicht gasdicht schließenden Formen zu beliebigen Formkörpern verschweißt werden.

Durch den Zusatz von Abietinsäure bzw. dessen Derivaten gelingt es, eine homogene, gleichmäßige Zellstruktur herzustellen. Die aus den Schaumstoffperlen hergestellten Formteile weisen eine gleichmäßige, glatte Oberfläche auf. Schnittflächen dieser Schaumstoffe sind gleichmäßig in der Zellstruktur.

Beispiele

Die in den Beispielen genannten Teile sind Gewichtsteile.

Die in den Beispielen angegebenen Polyolefinschaumstoffe bestehen zu 97,5 Gew.% aus Olefincopolymeren mit der jeweils in der Tabelle angegebenen Zusammensetzung, 1,7 Gew.% Ruß, 0,3 Gew.% Aluminiumdistearat und/oder Calciumstearat, sowie 0,5 Gew.-% der üblichen Oxydationsstabilisatoren für Polypropylen wie beispielsweise Thioester und/oder sterisch gehinderte Phenolderivate.

Die Bestimmung des Kristallitschmelzpunkts erfolgte durch Erhitzen einer Probemenge von 10 mg mit einer Aufheizgeschwindigkeit von 20°/min auf 200°C, Abkühlen der Probe mit einer Kühlrate von 20°/min auf Raumtemperatur und erneutes Erhitzen mit einer Heizrate von 20°/min über den Schmelzbereich hinaus. Der Kristallitschmelzpunkt entspricht der Spitze des Temperaturpeaks im DSC-Diagramm der zweiten Aufheizperiode.

Die Homogenität der Schaumstoffoberfläche wurde visuell beurteilt (1 = hervorragend; 2 = gut, 3 = befriedigend, 4 = schlecht). Die Zelldurchmesserverteilung wurde durch Auswertung von Schnittflächen bestimmt.

Die Ergebnisse sind in der Tabelle zusammengefaßt.

Beispiel 1

In einem Druckgefäß wurden 100 Teile eines Ethylen-Propylen-Copolymeren (Ethylengehalt 2,4 Gew.%; Schmelzindex MFI (230; 2,16) = 10 g/10 min; DSC-Maximum 148°C, mittleres Korngewicht ca. 1 mg), 23 Teile n/i-Butan (60:40), 0,005 Teile Abietinsäure, 230 Teile Wasser, 5 Teile Tricalciumphosphat und 0,18 Teile Natriumdodecylbenzolsulfonat als Dispergierhilfsmittel unter Rühren innerhalb von 45 Minuten auf 130°C erhitzt und anschließend, während der Druck im Kessel durch Nachpressen mit Stickstoff auf 30 bar konstant gehalten wurde, durch ein Bodenventil ausgetragen und entspannt. Man erhielt Schaumstoffpartikel der Schüttdichte 15 g/l mit einer Zellzahl von 10 bis 250 Zellen/mm².

Nach der Trocknung wurden die Partikel 8 Stunden bei 75°C mit einem Überdruck von 3 bar Stickstoff behandelt und danach entspannt. Beim anschließenden Lagern bei Raumtemperatur war nach etwa 1,5 Stunden ein vollständiger Druckabbau in den Zellen eingetreten. Die Schüttdichte betrug dann 17 g/l.

Die Partikel wurden nun pneumatisch in eine vorgeheizte Formkammer eingefüllt, wobei während der Befüllung ein Staudruck in der Form von 1 bar aufrechterhalten wurde. Die Form wurde beidseitig 12 Sekunden lang mit Dampf von 130°C beheizt. Anschließend wurde entspannt, mit Wasser gekühlt, die Form geöffnet und das Formteil entnommen. Die Dichte des Formkörpers betrug 30 g/l. Der Formkörper zeigte eine hervorragende Verschweißung und eine sehr homogene Oberfläche.

Beispiele 2 bis 4

Es wurde wie in Beispiel 1 gearbeitet, jedoch die in der Tabelle angegebenen Mengen an Abietinsäure (0,01; 0,02 bzw. 0,03 Gew.%) sowie unterschiedliche Mengen an Treibmitteln und Dispergierhilfsmitteln verwendet sowie unterschiedliche Imprägniertemperaturen und Imprägnierzeiten.

Beispiele 5 und 6 (Vergleichsbeispiele)

Man arbeitete wie in Beispiel 1, jedoch ohne Abietinsäure.

Beispiele 7 bis 9

Als Olefinpolymerisat wurde ein $C_2$-$C_3$-$C_4$-Terpolymerisat mit der in der Tabelle angegebenen Zusammensetzung verwendet. Abgesehen von den in der Tabelle angegebenen Bedingungen wurde wie in Beispiel 1 gearbeitet, wobei 0,04, 0,08 bzw. 0,10 Gew.% Abietinsäure eingesetzt wurden.

Beispiel 10 (Vergleichsbeispiel)

Man arbeitete wie in Beispiel 7, jedoch ohne Abietinsäure.

Tabelle

| Bsp. | Comonomergehalt | | | DSC-Maximum | MFI (230;2,16) | Versuchsbedingungen | | | |
|---|---|---|---|---|---|---|---|---|---|
| | C2 | C3 | C4/C6/C8 | | | n/i-Butan (60:40) | Tricalcium-phosphat | Na-dodecyl-benzol sulfonat | Abietin-säure |
| | | [Gew.%] | | [°C] | [g/10 min] | [Teile] | [Teile] | [Teile] | [Gew.-%] |
| 1 | 2,4 | 95,1 | – | 148 | 10 | 23 | 5 | 0,18 | 0,005 |
| 2 | 2,4 | 95,1 | – | 148 | 10 | 23 | 5 | 0,18 | 0,01 |
| 3 | 2,4 | 95,1 | – | 148 | 10 | 23 | 5 | 0,18 | 0,02 |
| 4 | 2,4 | 95,1 | – | 148 | 10 | 23 | 5 | 0,18 | 0,03 |
| 5 (Vgl.) | 2,4 | 95,1 | – | 148 | 10 | 23 | 5 | 0,18 | 0 |
| 6 (Vgl.) | 2,4 | 95,1 | – | 148 | 10 | 19,7 | 2,5 | 0,18 | 0 |
| 7 | 4 | 91,5 | 2 | 132 | 6,5 | 30 | 5 | 0,18 | 0,04 |
| 8 | 4 | 91,5 | 2 | 132 | 6,5 | 30 | 5 | 0,18 | 0,08 |
| 9 | 4 | 91,5 | 2 | 132 | 6,5 | 30 | 5 | 0,18 | 0,10 |
| 10 (Vgl.) | 4 | 91,5 | 2 | 132 | 6,5 | 30 | 5 | 0,18 | 0 |

Tabelle Forts.

| Bsp. | Imprägnier-temperatur [°C] | Imprägnierzeit [min] | Schüttdichte [g/l] | Formteildichte [g/l] | mittlerer Zelldurch-messer [mm] | Zelldurchmesser verteilung [mm] | Homogenität der Schaum-oberfläche |
|---|---|---|---|---|---|---|---|
| 1 | 130 | 45 | 17 | 30 | 0,1 | <0,1 bis 0,2 | 3 |
| 2 | 130 | 45 | 17 | 30 | <0,1 | <0,1 | 2 |
| 3 | 130 | 45 | 17 | 30 | <0,1 | <0,1 | 2 |
| 4 | 130 | 45 | 17 | 30 | <0,1 | <0,1 | 2 |
| 5 (Vgl.) | 130 | 45 | 17 | 30 | 0,5 | <0,1 bis 0,5 | 4 |
| 6 (Vgl.) | 130 | 45 | 28 | 59 | 0,2 | <0,1 bis 0,4 | 4 |
| 7 | 116 | 40 | 17 | 30 | 0,3 | 0,1 bis 0,4 | 3 |
| 8 | 116 | 40 | 17 | 30 | 0,27 | 0,2 bis 0,4 | 2 |
| 9 | 116 | 40 | 17 | 30 | 0,38 | 0,2 bis 0,4 | 2 |
| 10 (Vgl.) | 116 | 40 | 17 | 30 | 0,5 | <0,1 bis 1,0 | 4 |

## Patentansprüche

1. Polyolefin-Schaumstoffe der Dichte 0,01 bis 0,1 g/cm$^3$ mit einer Zellzahl von 2 bis 1000 Zellen/mm$^2$ und einer organischen Schäumhilfe, dadurch gekennzeichnet, daß als organische Schäumhilfe Harzsäuren, niedere Alkylester der Harzsäuren oder (Hydro)abietylphthalat verwendet werden.

2. Polyolefin-Schaumstoffe nach Anspruch 1, dadurch gekennzeichnet, daß die Schäumhilfe in einer Menge von 0,003 bis 0,3 Gew.%, bezogen auf das Polyolefin, eingesetzt wird.

3. Polyolefin-Schaumstoffe nach Anspruch 1 oder 2, dadurch gekennzeichnet, daß die Schäumhilfe Abietinsäure ist.

4. Polyolefin-Schaumstoffe nach einem der Ansprüche 1 bis 3, dadurch gekennzeichnet, daß das Polyolefin ein Olefincopolymerisat aus 0,5 bis 6 Gew.% Ethylen, 88 bis 99 Gew.% Propylen und 0,5 bis 6 Gew.% eines $C_4$- bis $C_8$-$\alpha$-Olefins ist.

5. Polyolefin-Schaumstoffe nach einem der Ansprüche 1 bis 3, dadurch gekennzeichnet, daß das Polyolefin ein Ethylen-Propylen-Copolymerisat aus 0,5 bis 6 Gew.% Ethylen und 94 bis 99,5 Gew.% Propylen ist.

6. Verfahren zur Herstellung der Polyolefin-Schaumstoffe gemäß Anspruch 1, dadurch gekennzeichnet, daß das Polyolefin in Form von Partikeln mit einem mittleren Durchmesser von 0,5 bis 5 mm zunächst in wäßriger Suspension mit der organischen Schäumhilfe beschichtet wird, dann mit 0,1 bis 0,4 kg, pro kg des Polyolefins, eines Treibmittels bei einer Temperatur im Bereich zwischen bis zu 20°C unterhalb des Kristallitschmelzpunktes und bis zu 20°C oberhalb des Kristallitschmelzpunktes des Polymeren unter Druck imprägniert und anschließend unter Aufschäumen entspannt wird.

Europäisches
Patentamt

**EUROPÄISCHER RECHERCHENBERICHT**

Nummer der Anmeldung

EP    92 12 1548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 265 811 (SEKISUI KASEIHIN KOGYO KABUSHIKI KAISHA) <br> * Ansprüche 1,5,8,10,12,13 * <br> * Seite 6, Zeile 38 - Seite 7, Zeile 21 * <br> * Seite 9, Zeile 34 - Zeile 37 * <br> --- | 1-3,6 | C08J9/00 <br> C08J9/18 <br> C08J9/22 |
| A | DE-A-4 035 118 (BRIDGESTONE CORP.) <br> * Ansprüche 4-7 * <br> * Seite 3, Zeile 58 - Zeile 60 * <br> --- | 1-5 | |
| D,A | EP-A-0 269 983 (BASF AKTIENGESELLSCHAFT) <br> * Anspruch 2 * <br> * Seite 2, Zeile 54 - Zeile 55 * <br> * Seite 3, Zeile 55 - Zeile 57 * <br> --- | 1-3 | |
| A | DATABASE WPIL <br> Derwent Publications Ltd., London, GB; <br> AN 8357626K[24] <br> & JP-A-58 076 433 (NIPPON STYRENE PAPE) 9. Mai 1983 <br> * Zusammenfassung * <br><br> ----- | 1 | |
| | | | **RECHERCHIERTE SACHGEBIETE (Int. Cl.5)** <br><br> C08J <br> C08K |

Der vorliegende Recherchenbericht wurde für alle Patentansprüche erstellt

| Recherchenort | Abschlußdatum der Recherche | Prüfer |
|---|---|---|
| DEN HAAG | 19 APRIL 1993 | NIAOUNAKIS M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)